# FASCICULE DE BREVET EUROPEEN

(11) **EP 3 910 621 B1**
(45) Date de publication et mention de la délivrance du brevet: **15.02.2023**
(21) Numéro de dépôt: 21171580.0
(22) Date de dépôt: 30.04.2021
(51) Int. Cl.: G10D 3/173

(54) **DISPOSITIF POUR METTRE EN VIBRATION LES CORDES D'UN INSTRUMENT**
VORRICHTUNG ZUM VIBRIEREN DER SAITEN EINES INSTRUMENTS
DEVICE FOR MAKING THE STRINGS OF AN INSTRUMENT VIBRATE

(30) Priorité: 14.05.2020 FR 2004794
(43) Date de publication de la demande: 17.11.2021
(73) Titulaire: Pellet Langlais, Jean-Pierre, 74250 VIUZ EN SALLAZ (FR)
(72) Inventeur: Pellet Langlais, Jean-Pierre, 74250 VIUZ EN SALLAZ (FR)
(74) Mandataire: Cabinet Poncet

(56) Documents cités:
- WO-A1-2007/003931
- FR-A1- 2 732 803
- US-A1- 2012 066 873
- US-A1- 2019 376 647

## Description

### DOMAINE TECHNIQUE DE L'INVENTION

La présente invention concerne le domaine de la musique, et concerne plus particulièrement un dispositif pour mettre en vibration les cordes d'un instrument à cordes tel qu'une guitare ou une mandoline.

Lorsqu'on joue de la guitare, il est possible de jouer « aux doigts », c'est-à-dire en mettant en vibration les cordes par frottement des doigts directement sur les cordes ou en pinçant les cordes avec les doigts. Pour des sonorités différentes, il est également possible de gratter ou pincer les cordes au moyen d'un « plectre » (également appelé « médiator »).

Les musiciens peuvent parfois utiliser les deux méthodes au cours d'un même morceau de musique, et doivent ainsi effectuer la préhension ou la remise du plectre pendant le jeu.

Quand il n'est pas utilisé, le plectre encombre inutilement le musicien qui le stocke entre ses lèvres ou à l'intérieur de sa main, ce qui provoque une gêne de sa respiration ou limite sa dextérité. Et une prise ou une remise du plectre occasionne le plus souvent un temps mort dont la longueur est fonction de la rapidité avec laquelle le musicien récupère et oriente correctement son plectre avant de reprendre le jeu.

Pour limiter ces inconvénients, le document US 9,135,897 B2 décrit un dispositif pour mettre en vibration les cordes d'un instrument à cordes, comprenant :
- un plectre comprenant une première surface principale et comprenant une deuxième surface principale opposée à la première surface principale,
- un porte-plectre comportant des moyens d'engagement aptes à recevoir un doigt d'un utilisateur, et comportant une platine à surface de réception,
- des moyens de retenue par aimantation du plectre selon sa deuxième surface principale sur la surface de réception.

Un tel dispositif permet une retenue par aimantation du plectre sur la main de l'utilisateur pour une récupération rapide.

Pour faciliter encore la récupération du plectre et accélérer son orientation par le musicien qui le reprend, le document WO 2007/003931 A1 prévoit une retenue du plectre sur le porte-plectre en une position prédéterminée au moyen de deux aimants permanents, à savoir un premier aimant permanent sur le porte-plectre et un deuxième aimant permanent sur le plectre. La disposition des pôles sud et nord des deux aimants permanents, tous deux disposés simultanément à fleur de la surface du porte-plectre pour l'un des aimants et à fleur de la surface du plectre pour l'autre des aimants, est censée orienter le plectre en une position unique prédéterminée. Si l'orientation relative du plectre et du porte-plectre est correcte (i.e. dans ou proche de ladite position prédéterminée), il se produit une attraction. Si l'orientation relative du plectre et du porte-plectre est incorrecte, il peut se produire une répulsion.

Une retenue fiable du plectre nécessite d'utiliser des aimants permanents présentant une bonne force d'aimantation. Il en résulte que, en cas d'orientation relative incorrecte du plectre et du porte-plectre lorsque le plectre est ramené sur le porte-plectre, il se produit une force de répulsion également élevée. Or, le plectre est généralement très léger. Ainsi, dans le cadre du dispositif du document WO 2007/003931 A1, une orientation relative incorrecte du plectre et du porte-plectre peut contrarier excessivement la remise du plectre sur le porte-plectre au point de gêner le musicien, voire de faire échapper accidentellement le plectre de la main de l'utilisateur. D'autres documents qui font parti de l'art antérieur sont les documents FR 2 732 803, US 2019/376647 et US 2012/066873.

### EXPOSE DE L'INVENTION

La présente invention a pour but de résoudre en tout ou partie les problèmes de l'art antérieur.

Un problème proposé par la présente invention est de fournir un dispositif comprenant un plectre et un porte-plectre limitant les risques de gêne, voire de perte, lorsque le musicien replace le plectre sur le porte-plectre.

Simultanément, la présente invention vise à fournir un dispositif permettant de façon fiable la réception et la tenue du plectre sur le porte-plectre en au moins une position prédéterminée pour en faciliter la préhension et le replacement.

Pour atteindre ces objets ainsi que d'autres, l'invention propose un dispositif pour mettre en vibration les cordes d'un instrument à cordes, comprenant :
- un plectre comprenant une première surface principale et comprenant une deuxième surface principale opposée à la première surface principale,
- un porte-plectre comportant des moyens d'engagement aptes à recevoir un doigt d'un utilisateur, et comportant une platine à surface de réception,
- des moyens de retenue par aimantation du plectre selon sa deuxième surface principale sur la surface de réception ;
   selon l'invention, les moyens de retenue par aimantation comprennent :
   - au moins deux premiers aimants permanents solidaires de la platine, lesdits au moins deux premiers aimants permanents ayant chacun leur pôle magnétique d'une première et même polarité orienté vers la surface de réception,
   - au moins deux seconds aimants permanents solidaires du plectre, lesdits au moins deux seconds aimants permanents ayant chacun leur pôle magnétique d'une deuxième et même polarité orienté vers la deuxième surface principale, la deuxième polarité étant inverse à la première polarité,
      de façon que lesdits au moins deux seconds aimants permanents solidaires du plectre peuvent être respectivement attirés par les premiers aimants permanents solidaires de la platine.

Dans le dispositif selon l'invention, les moyens de retenue par aimantation procurent au moins une orientation relative prédéterminée dans laquelle le plectre est reçu et retenu sur le porte-plectre, et il se produit systématiquement un effet d'attraction relative du plectre lorsque l'utilisateur repose le plectre sur le porte-plectre. Aucune répulsion ne peut se produire. Cela limite les risques de gêne, voire de perte, lorsque le musicien replace le plectre sur le porte-plectre.

De préférence, la platine et le plectre peuvent avoir chacun seulement deux aimants permanents. Cela procure au plectre seulement deux orientations relatives prédéterminées dans lesquelles il est reçu et retenu sur le porte-plectre, de sorte que le musicien peut le placer sur le porte-plectre et le reprendre plus facilement. Ces deux orientations relatives prédéterminées sont disposées à 180 degrés l'une de l'autre. En pratique, une seule et unique orientation relative prédéterminée est utilisée par le musicien. En outre, le fait de n'avoir que deux aimants permanents permet de rester compatible avec la taille et l'encombrement du plectre, et la nécessité que ce dernier conserve un poids modéré.

Avantageusement, les premiers aimants permanents solidaires de la platine peuvent être logés dans la platine, en ayant leur pôle magnétique d'une première polarité disposé à fleur de la surface de réception.

Avantageusement, les seconds aimants permanents solidaires du plectre peuvent être logés dans le plectre, en ayant leur pôle magnétique d'une deuxième polarité disposé à fleur de la deuxième surface principale.

Pour encore plus de fiabilité dans le positionnement relatif du plectre et du porte-plectre et dans la retenue du plectre, les pôles magnétiques de première polarité des premiers aimants permanents peuvent avantageusement avoir le même écartement et la même section transversale que les pôles magnétiques de deuxième polarité des seconds aimants permanents.

Avantageusement, la surface de réception peut être recouverte d'une couche d'un matériau fibreux, de préférence de la feutrine. Une telle couche permet d'amortir efficacement le bruit (claquement) pouvant se produire lors de la venue en contact de la deuxième surface principale du plectre avec la surface de réception du porte-plectre, tout en favorisant le glissement du plectre sur le porte-plectre lorsque l'utilisateur le prend ou le remet sur le porte-plectre. En pratique, la feutrine a procuré d'excellents résultats.

Avantageusement, on peut prévoir que :
- le plectre a une forme sensiblement triangulaire, avec un premier sommet destiné à gratter les cordes, avec une arête opposée, et avec des première et deuxième arêtes latérales adjacentes au premier sommet,
- les seconds aimants permanents du plectre sont plus proches de l'arête opposée que du premier sommet.

Le plectre peut ainsi être disposé sur la platine de façon à être excentré par rapport à la platine, ce qui facilite la préhension du plectre et permet de le disposer dans la main sans trop gêner les mouvements des doigts de l'utilisateur.

De préférence, on peut prévoir que :
- les seconds aimants permanents sont déportés en direction d'une extrémité de ladite arête opposée,
- les moyens d'engagement s'étendent généralement dans un premier plan,
- les premiers et seconds aimants permanents sont respectivement disposés sur la platine et sur le plectre de façon que, lorsque les seconds aimants permanents sont retenus par les premiers aimants permanents, le plectre se trouve orienté avec sa deuxième arête latérale sensiblement parallèle audit premier plan.

Par sensiblement parallèle, on entend alors désigner une orientation de la deuxième arête latérale par rapport au premier plan selon un angle (positif ou négatif) d'au plus 15 à 20 degrés. Une telle disposition permet de limiter les risques que le premier sommet destiné à gratter les cordes (qui est généralement assez pointu) gêne l'utilisateur quand il plie ses doigts et/ou vienne blesser l'intérieur de la main de l'utilisateur lorsqu'il y loge le plectre et plie ses doigts.

Selon une autre définition, on peut avantageusement prévoir que :
- les seconds aimants permanents sont déportés en direction d'une extrémité de ladite arête opposée,
- les moyens d'engagement s'étendent généralement dans un premier plan,
- les premiers aimants permanents sont alignés selon une première direction sensiblement parallèle audit premier plan,
- les seconds aimants permanents sont alignés selon une deuxième direction sensiblement parallèle à la deuxième arête latérale.

Par sensiblement parallèle, on entend alors désigner des orientations respectives des première et deuxième directions telles que la deuxième arête latérale est disposée par rapport au premier plan selon un angle (positif ou négatif) d'au plus 15 à 20 degrés. Une telle disposition permet de limiter les risques que le premier sommet destiné à gratter les cordes (qui est généralement assez pointu) gêne l'utilisateur quand il plie ses doigts et/ou vienne blesser l'intérieur de la main de l'utilisateur lorsqu'il y loge le plectre et plie ses doigts.

Avantageusement, le plectre peut présenter, au voisinage de son arête opposée au premier sommet, une épaisseur comprise entre 1,5 mm et 3 mm. Une telle épaisseur permet de loger les seconds aimants permanents tout en permettant une bonne préhension du plectre par le musicien lorsqu'il utilise le plectre pour gratter les cordes.

De préférence, la première surface principale peut présenter une adhérence et/ou une rugosité et/ou une texturation par des reliefs qui est supérieure à celle(s) de la deuxième surface principale. On facilite ainsi pour le musicien la reprise du plectre sur le porte-plectre en le faisant glisser sur le porte-plectre. Simultanément, on permet au musicien d'identifier les surfaces du plectre au toucher et de l'orienter de façon à bien mettre la deuxième surface principale du plectre face à la surface de réception du porte-plectre.

Avantageusement, les moyens d'engagement peuvent comporter un anneau, de préférence à taille réglable, et tout préférentiellement à taille réglable par une fente radiale ménagée dans l'anneau.

De préférence, on peut prévoir que :
- les moyens d'engagement s'étendent généralement dans un premier plan,
- la platine s'étend dans un deuxième plan sensiblement perpendiculaire au premier plan et s'étend de façon prépondérante ou complètement d'un premier côté dudit premier plan.

Une telle disposition de la platine permet de limiter la gêne que pourrait occasionner la platine lorsque l'utilisateur plie son doigt engagé dans les moyens d'engagement.

Selon un autre aspect de la présente invention, il est proposé l'utilisation d'un dispositif tel que décrit précédemment, lors de laquelle l'utilisateur porte le porte-plectre au doigt en ayant la platine disposée du côté intérieur de sa main. Une telle utilisation permet de réduire les risques de perte accidentelle du plectre lorsque le musicien retire le plectre du porte-plectre ou le replace sur le porte-plectre. En effet, la main refermée permet de retenir le plectre si celui-ci commence à échapper. Et le musicien peut facilement prendre le plectre en appliquant son pouce sur la première surface principale du plectre, puis en faisant glisser le plectre sur le porte-plectre et ses doigts en direction des extrémités libres de ses doigts, et peut facilement réaliser le mouvement inverse pour replacer le plectre sur le porte-plectre.

De préférence, pour limiter la gêne que pourrait occasionner la platine lorsque l'utilisateur plie son doigt engagé dans les moyens d'engagement, l'utilisateur porte le porte-plectre au doigt de façon que la platine se développe de façon prépondérante ou complètement en direction de l'extrémité libre de son doigt.

### DESCRIPTION SOMMAIRE DES DESSINS

D'autres objets, caractéristiques et avantages de la présente invention ressortiront de la description suivante d'un mode de réalisation particulier, faite en relation avec les figures jointes, parmi lesquelles :
[Fig.1] La figure 1 est une vue de dessus du porte-plectre d'un dispositif selon un mode de réalisation particulier de l'invention ;
[Fig.2] La figure 2 est vue de côté du porte-plectre de la figure 1 ;
[Fig.3] La figure 3 est une vue de dessus du plectre d'un dispositif selon un mode de réalisation particulier de l'invention ;
[Fig.4] La figure 4 est une vue de dessous du plectre de la figure 3 ;
[Fig.5] La figure 5 est une vue de dessus d'un dispositif selon un mode de réalisation particulier de l'invention, comprenant le porte-plectre de la figure 1 et le plectre de la figure 3 ;
[Fig.6] La figure 6 est une vue de côté du dispositif de la figure 5 ;
[Fig.7] La figure 7 est une vue de dessus du porte-plectre de la figure 1 au doigt d'un utilisateur ; et
[Fig.8] La figure 8 est une vue de dessus du dispositif de la figure 5 au doigt d'un utilisateur.

### DESCRIPTION DES MODES DE REALISATION PREFERES

Lorsque des références numériques identiques sont utilisées dans plusieurs modes de réalisation de l'invention ou figures, ces références numériques désignent des éléments identiques ou similaires dans chacun des modes de réalisation ou figures.

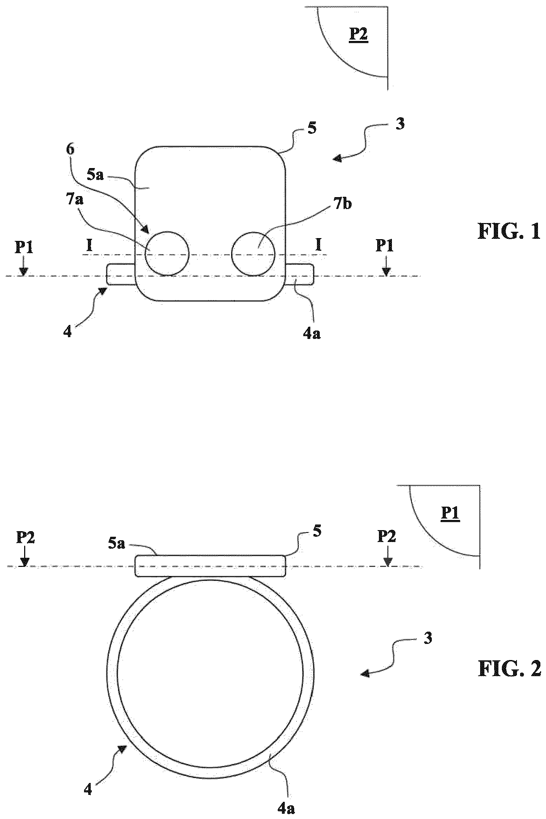

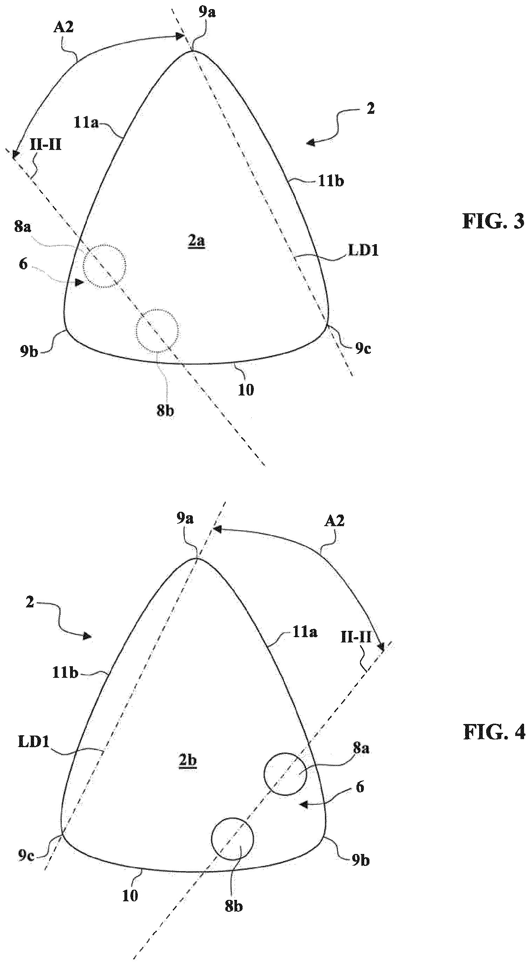

Sur les figures 1 à 6 est illustré un mode de réalisation particulier d'un dispositif 1 selon la présente invention, pour mettre en vibration les cordes d'un instrument à cordes. Ce dispositif 1 comprend un plectre 2 (figures 3 et 4) et un porte-plectre 3 (figures 1 et 2).

Le porte-plectre 3 comporte des moyens d'engagement 4 aptes à recevoir un doigt d'un utilisateur. Les moyens d'engagement 4 comportent ici un anneau 4a dont la taille peut avantageusement être rendue réglable, par exemple au moyen d'une fente radiale.

Le porte-plectre 3 comporte également une platine 5 à surface de réception 5a. La surface de réception 5a est sensiblement plane.

Le plectre 2 comprend une première surface principale 2a (visible sur la figure 3) et comprend une deuxième surface principale 2b (visible sur la figure 4) opposée à la première surface principale 2a.

Des moyens de retenue par aimantation 6 permettent de retenir le plectre 2 selon sa deuxième surface principale 2b sur la surface de réception 5a.

De façon plus spécifique, les moyens de retenue par aimantation 6 comprennent :
- au moins deux premiers aimants permanents 7a et 7b (ici seulement deux) solidaires de la platine 5, lesdits au moins deux premiers aimants permanents 7a et 7b ayant chacun leur pôle magnétique d'une première et même polarité orienté vers la surface de réception 5a,
- au moins deux seconds aimants permanents 8a et 8b (ici seulement deux) solidaires du plectre 2, lesdits au moins deux seconds aimants permanents 8a et 8b ayant chacun leur pôle magnétique d'une deuxième et même polarité orienté vers la deuxième surface principale 2b, la deuxième polarité étant inverse de la première polarité,
de façon que lesdits au moins deux (ici seulement deux) seconds aimants permanents 8a et 8b solidaires du plectre 2 peuvent être respectivement attirés par lesdits au moins deux (ici seulement deux) premiers aimants permanents 7a et 7b solidaires de la platine 5.

Selon une première possibilité, les premiers aimants permanents 7a et 7b sont orientés avec leur pôle sud dirigé vers la surface de réception 5a. En ce cas, les seconds aimants permanents 8a et 8b sont orientés avec leur pôle nord dirigé vers la deuxième surface principale 2b.

Selon une deuxième possibilité, les premiers aimants permanents 7a et 7b sont orientés avec leur pôle nord dirigé vers la surface de réception 5a. En ce cas, les seconds aimants permanents 8a et 8b sont orientés avec leur pôle sud dirigé vers la deuxième surface principale 2b.

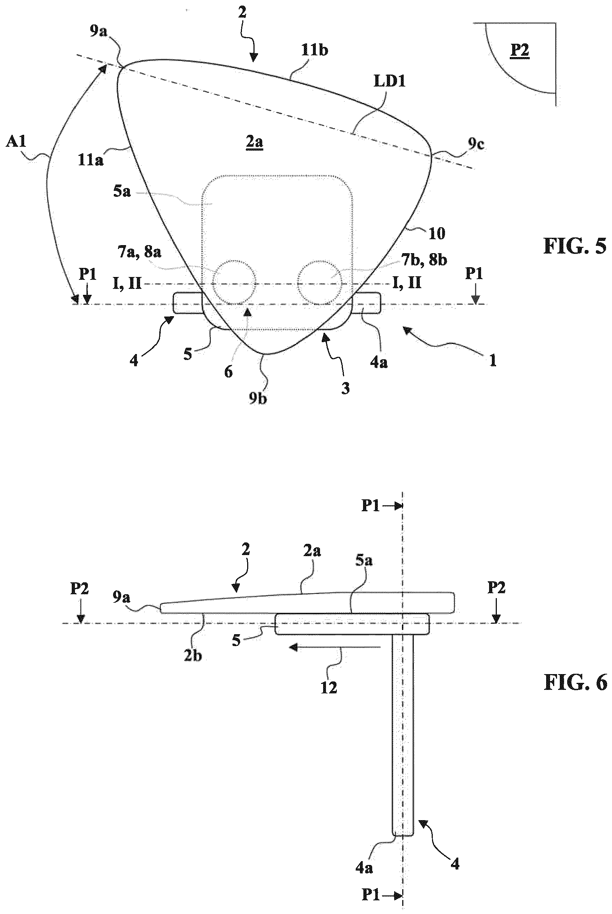

Dans tous les cas, les premiers aimants permanents 7a et 7b sont ainsi aptes à attirer et retenir les seconds aimants permanents 8a et 8b pour attirer et retenir le plectre 2 sur la platine 5, comme cela est illustré sur les figures 5 et 6.

Les premiers aimants permanents 7a et 7b sont logés dans la platine 5, en ayant de préférence leur pôle magnétique d'une première polarité disposé à fleur de la surface de réception 5a. En pratique, les premiers aimants permanents 7a et 7b peuvent être rapportés par tous moyens (collage, engagement en force, etc.) dans deux logements correspondants ménagés dans la surface de réception 5a de la platine 5.

Les seconds aimants permanents 8a et 8b sont logés dans le plectre 2, en ayant de préférence leur pôle magnétique d'une deuxième polarité disposé à fleur de la deuxième surface principale 2b. En pratique, les seconds aimants permanents 8a et 8b peuvent être rapportés par tous moyens (collage, engagement en force, etc.) dans deux logements correspondants ménagés dans la deuxième surface principale 2b du plectre 2.

Dans le mode de réalisation illustré sur les figures 1 à 6, les pôles magnétiques de première polarité des premiers aimants permanents 7a et 7b ont le même écartement et la même section transversale que les pôles magnétiques de deuxième polarité des seconds aimants permanents 8a et 8b. Les premiers aimants permanents 7a et 7b peuvent ainsi être disposés en exacte correspondance des seconds aimants permanents 8a et 8b lorsque le plectre 2 est reçu sur la platine 5 (figure 5).

De façon préférentielle, la surface de réception 5a peut être recouverte d'une couche d'un matériau fibreux, de préférence de la feutrine. La couche de matériau fibreux se trouve alors entre le plectre 2 et la platine 5 pour amortir le bruit lors de la venue en contact du plectre 2 contre la platine 5 sous l'effet des moyens de retenue par aimantation 6, et favorise également le glissement du plectre 2 sur la platine 5.

Comme illustré sur les figures 3 et 4, le plectre 2 a une forme sensiblement triangulaire (presque en « goutte d'eau »), avec un premier sommet 9a destiné à gratter les cordes, avec une arête opposée 10, et avec des première et deuxième arêtes latérales 11a et 11b adjacentes au premier sommet 9a. La première arête latérale 11a relie le premier sommet 9a à un deuxième sommet 9b. La deuxième arête latérale 11b relie le premier sommet 9a à un troisième sommet 9c. Les arêtes 10, 11a et 11b peuvent être rectilignes ou courbes (convexes et/ou concaves).

Les seconds aimants permanents 8a et 8b du plectre 2 sont plus proches de l'arête opposée 10 que du premier sommet 9a.

On voit plus particulièrement sur les figures 1, 4 et 5 que :
- les seconds aimants permanents 8a et 8b sont déportés en direction d'une extrémité de ladite arête opposée 10 (ici en direction du deuxième sommet 9b),
- les moyens d'engagement 4 (ici l'anneau 4a) s'étendent généralement dans un premier plan P1,
- les premiers aimants permanents 7a et 7b, et les seconds aimants permanents 8a et 8b, sont respectivement disposés sur la platine 5 et sur le plectre 2 de façon que, lorsque les seconds aimants permanents 8a et 8b sont retenus par les premiers aimants permanents 7a et 7b, le plectre 2 se trouve orienté avec sa deuxième arête latérale 11b sensiblement parallèle audit premier plan P1.

L'orientation de la deuxième arête latérale 11b est ici repérée par la ligne discontinue LD1 passant par les sommets 9a et 9c.

Par sensiblement parallèle, on entend désigner une orientation de la deuxième arête latérale 11b par rapport au premier plan P1 selon un angle A1 (positif ou négatif) d'au plus 15 à 20 degrés. Ici, l'angle A1 est de 13 degrés. L'angle A1 est de préférence le plus proche de 0.

Une telle disposition permet de limiter les risques que le premier sommet 9a destiné à gratter les cordes (qui est généralement assez pointu) gêne l'utilisateur quand il plie ses doigts et/ou vienne blesser l'intérieur de la main de l'utilisateur lorsqu'il y loge le plectre 2 et plie ses doigts.

Selon une autre définition, on considère que :
- les seconds aimants permanents 8a et 8b sont déportés en direction d'une extrémité de ladite arête opposée 10 (ici en direction du deuxième sommet 9b),
- les moyens d'engagement 4 (ici l'anneau 4a) s'étendent généralement dans un premier plan P1,
- les premiers aimants permanents 7a et 7b sont alignés selon une première direction I-I sensiblement parallèle audit premier plan P1,
- les seconds aimants 8a et 8b sont alignés selon une deuxième direction II-II sensiblement parallèle à la deuxième arête latérale 11b.

L'orientation de la deuxième arête latérale 11b est ici encore repérée par la ligne discontinue LD1 passant par les sommets 9a et 9c.

Une telle disposition permet de limiter les risques que le premier sommet 9a destiné à gratter les cordes (qui est généralement assez pointu) gêne l'utilisateur quand il plie ses doigts et/ou vienne blesser l'intérieur de la main de l'utilisateur lorsqu'il y loge le plectre 2 et plie ses doigts.

De bons résultats ont été obtenus avec une orientation de la deuxième arête latérale 11b par rapport au premier plan P1 selon un angle A1 (positif ou négatif) d'au plus 15 à 20 degrés. L'angle A1 est de préférence le plus proche de 0.

Ici, la première direction I-I est parallèle au premier plan P1 (et forme donc un angle nul avec le premier plan P1), tandis que la deuxième direction II-II forme un angle A2 de 13 degrés avec la deuxième arête latérale 11b. Il en résulte que, lorsque le plectre 2 est retenu sur le porte-plectre 3 (figure 5), la deuxième arête latérale 11b forme un angle A1 de 13 degrés avec le premier plan P1.

Pour une bonne préhension par le musicien lorsqu'il joue avec le plectre 2, et pour loger les seconds aimants permanents 8a et 8b, le plectre 2 présente, au voisinage de son arête 10 opposée au premier sommet 9a, une épaisseur comprise entre 1,5 mm et 3 mm. En direction de son premier sommet 9a, le plectre 2 présente une épaisseur décroissante pouvant aller jusqu'à 0,2 mm.

La première surface principale 2a présente une adhérence et/ou une rugosité et/ou une texturation par des reliefs qui est supérieure à celle(s) de la deuxième surface principale 2b. Cela facilite pour le musicien la reprise du plectre 2 sur le porte-plectre 3 en le faisant glisser sur le porte-plectre 3. Simultanément, cela permet au musicien d'identifier les surfaces principales 2a et 2b du plectre 2 au toucher et de l'orienter de façon à bien mettre la deuxième surface principale 2b du plectre 2 face à la surface de réception 5a du porte-plectre 3.

On voit plus particulièrement sur la figure 6 que :
- les moyens d'engagement 4 (anneau 4a) s'étendent généralement dans un premier plan P1,
- la platine 5 s'étend dans un deuxième plan P2 sensiblement perpendiculaire au premier plan P1 et s'étend de façon prépondérante ou complètement d'un premier côté dudit premier plan P1 (dans le sens défini par la flèche 12).

Lorsqu'un musicien utilise le plectre 2 selon la présente invention, il engage l'anneau 4a autour de l'un de ses doigts D (de préférence le majeur ou l'annulaire) de sa main M destinée à gratter les cordes.

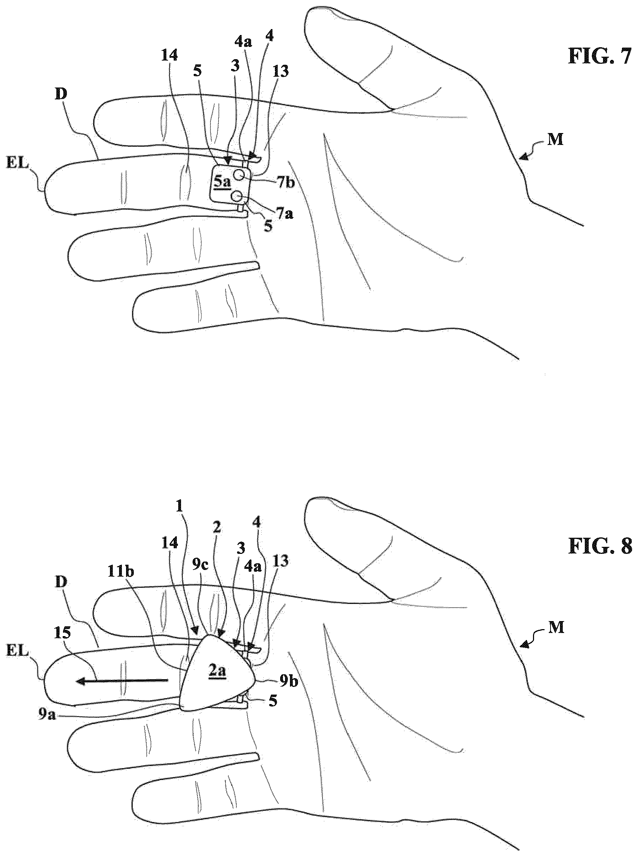

De préférence, comme illustré sur la figure 7, l'utilisateur porte le porte-plectre 3 au doigt D (ici le majeur) en ayant la platine 5 disposée du côté intérieur de sa main M.

Lorsque la platine 5 s'étend de façon prépondérante ou complètement d'un premier côté dudit premier plan P1, l'utilisateur porte le porte-plectre 3 au doigt D de façon que la platine 5 se développe de façon prépondérante ou complètement en direction de l'extrémité libre EL de son doigt D (comme illustré sur la figure 7). Cela limite la gêne que pourrait occasionner la platine 5 lorsque l'utilisateur plie son doigt D engagé dans les moyens d'engagement 4 (ici le majeur) selon l'articulation métacarpo-phalangienne 13.

L'orientation de la deuxième arête latérale 11b (ici selon un angle A1 de 13 degrés avec le premier plan P1) permet de rendre celle-ci sensiblement parallèle à l'articulation interphalangienne proximale 14 du doigt D portant le dispositif 1 (ici le majeur) pour limiter la gêne de l'utilisateur lorsqu'il sollicite cette articulation interphalangienne proximale 14.

Lorsqu'il joue aux doigts, l'utilisateur garde le plectre 2 sur la surface de réception 5a du porte-plectre 3, comme illustré sur la figure 8.

Lorsqu'il souhaite utiliser le plectre 2, l'utilisateur pose son pouce sur la première surface principale 2a du plectre 2 et pousse celui-ci en direction de l'extrémité libre EL de son doigt D selon un mouvement illustré par la flèche 15.

La couche de matériau fibreux (feutrine notamment) et/ou l'adhérence et/ou la rugosité et/ou la texturation de la première surface principale 2a facilite(nt) le glissement pour détacher le plectre 2 de la platine 5.

Une fois le plectre 2 parvenu au niveau de l'extrémité libre EL de son doigt D, le musicien pince celui-ci, à proximité de l'arête opposée 10, entre son pouce et son doigt D (majeur) ou entre son pouce et un autre doigt (index le plus souvent).

La prise du plectre 2 est rapide, fiable et s'effectue selon un mouvement très simple à réaliser.

Lorsque le musicien souhaite revenir à un jeu aux doigts, il déplace le plectre 2 au moyen de son pouce en direction de la platine 5 selon un mouvement inverse de la flèche 15 en le faisant glisser sensiblement sur et le long de son doigt D. Du fait de son orientation pour jouer au plectre, le plectre 2 arrive sur la platine 5 dans une orientation sensiblement identique à celle illustrée sur la figure 8, et les premiers 7a et 7b et seconds 8a et 8b aimants permanents coopèrent alors pour recevoir et retenir le plectre 2 sur la platine 5 dans la position prédéterminée illustrée sur la figure 8.

Dans le cas où, lors de l'approche par le plectre 2 de la platine 5, le plectre 2 est dans une orientation légèrement différente de celle illustrée sur la figure 8, les premiers 7a et 7b et seconds 8a et 8b aimants permanents coopèrent alors (sans répulsion) pour le réorienter correctement puis le recevoir et le retenir sur la platine 5 dans la position prédéterminée illustrée sur la figure 8.

Le musicien peut alors poursuivre par un jeu aux doigts sans se préoccuper du plectre 2 qui est retenu de façon fiable au creux de sa main, et peut même plier son doigt D selon ses articulations métacarpo-phalangienne 13 et interphalangienne proximale 14 avec une gêne très limitée.

La remise du plectre 2 sur la platine 5 est rapide, fiable et s'effectue selon un mouvement très simple à réaliser.

Dans l'utilisation illustrée sur les figures 7 et 8, l'anneau 4a est engagé sur le doigt D jusqu'au voisinage immédiat de l'articulation métacarpo-phalangienne 13 et la platine 5 s'étend sur la première phalange. L'anneau 4a pourrait toutefois être disposé sur le doigt D au voisinage immédiat de l'articulation interphalangienne proximale 14 tandis que la platine 5 s'étend sur la deuxième phalange.

La présente invention n'est pas limitée aux modes de réalisation qui ont été explicitement décrits, mais elle en inclut les diverses variantes et généralisations contenues dans le domaine des revendications ci-après.

## Revendications

1. 1 - Dispositif (1) pour mettre en vibration les cordes d'un
instrument à cordes, comprenant :
- un plectre (2) comprenant une première surface principale (2a) et comprenant une deuxième surface principale (2b) opposée à la première surface principale (2a),
- un porte-plectre (3) comportant des moyens d'engagement (4) aptes à recevoir un doigt (D) d'un utilisateur, et comportant une platine (5) à surface de réception (5a),
- des moyens de retenue par aimantation (6) du plectre (2) selon sa deuxième surface principale (2b) sur la surface de réception (5a),
**caractérisé en ce que** les moyens de retenue par aimantation (6) comprennent :
- au moins deux premiers aimants permanents (7a, 7b) solidaires de la platine (5), lesdits au moins deux premiers aimants permanents (7a, 7b) ayant chacun leur pôle magnétique d'une première et même polarité orienté vers la surface de réception (5a),
- au moins deux seconds aimants permanents (8a, 8b) solidaires du plectre (2), lesdits au moins deux seconds aimants permanents (8a, 8b) ayant chacun leur pôle magnétique d'une deuxième et même polarité orienté vers la deuxième surface principale (2b), la deuxième polarité étant inverse à la première polarité, de façon que lesdits au moins deux seconds aimants permanents (8a, 8b) solidaires du plectre (2) peuvent être respectivement attirés par lesdits au moins deux premiers aimants permanents (7a, 7b) solidaires de la platine (5).

2. 2 - Dispositif (1) selon la revendication 1, **caractérisé en ce que** la platine (5) et le plectre (2) ont chacun seulement deux aimants permanents (7a, 7b ; 8a, 8b).

3. 3 - Dispositif (1) selon l'une des revendications 1 ou 2,
**caractérisé en ce que** les premiers aimants permanents (7a, 7b) solidaires de la platine (5) sont logés dans la platine (5), en ayant de préférence leur pôle magnétique d'une première polarité disposé à fleur de la surface de réception (5a).

4. 4 - Dispositif (1) selon l'une quelconque des revendications 1 à 3, **caractérisé en ce que** les seconds aimants permanents (8a, 8b) solidaires du plectre (2) sont logés dans le plectre (2), en ayant de préférence leur pôle magnétique d'une deuxième polarité disposé à fleur de la deuxième surface principale (2b).

5. 5 - Dispositif (1) selon l'une quelconque des revendications 1 à 4, **caractérisé en ce que** les pôles magnétiques de première polarité des premiers aimants permanents (7a, 7b) ont le même écartement et la même section transversale que les pôles magnétiques de deuxième polarité des seconds aimants permanents (8a, 8b).

6. 6 - Dispositif (1) selon l'une quelconque des revendications 1 à 5, **caractérisé en ce que** la surface de réception (5a) est recouverte d'une couche d'un matériau fibreux, de préférence de la feutrine.

7. 7 - Dispositif (1) selon l'une quelconque des revendications 1 à 6, **caractérisé en ce que** :
- le plectre (2) a une forme sensiblement triangulaire, avec un premier sommet (9a) destiné à gratter les cordes, avec une arête opposée (10), et avec des première (11a) et deuxième (11b) arêtes latérales adjacentes au premier sommet (9a),
- les seconds aimants permanents (8a, 8b) du plectre (2) sont plus proches de l'arête opposée (10) que du premier sommet (9a).

8. 8 - Dispositif (1) selon la revendication 7, **caractérisé en ce que** :
- les seconds aimants permanents (8a, 8b) sont déportés en direction d'une extrémité de ladite arête opposée (10),
- les moyens d'engagement (4) s'étendent généralement dans un premier plan (P1),
- les premiers et seconds aimants permanents (7a, 7b ; 8a, 8b) sont respectivement disposés sur la platine (5) et sur le plectre (2) de façon que, lorsque les seconds aimants permanents (8a, 8b) sont retenus par les premiers aimants permanents (7a, 7b), le plectre (2) se trouve orienté avec sa deuxième arête latérale (11b) sensiblement parallèle audit premier plan (P1).

9. 9 - Dispositif (1) selon la revendication 7, **caractérisé en ce que** :
- les seconds aimants permanents (8a, 8b) sont déportés en direction d'une extrémité de ladite arête opposée (10),
- les moyens d'engagement (4) s'étendent généralement dans un premier plan (P1),
- les premiers aimants permanents (7a, 7b) sont alignés selon une première direction (I-I) sensiblement parallèle audit premier plan (P1),
- les seconds aimants permanents (8a, 8b) sont alignés selon une deuxième direction (II-II) sensiblement parallèle à la deuxième arête latérale (11b).

10. 10 - Dispositif (1) selon l'une quelconque des
revendications 7 à 9, **caractérisé en ce que** le plectre (2) présente, au voisinage de son arête opposée (10) au premier sommet (9a), une épaisseur comprise entre 1,5 mm et 3 mm.

11. 11 - Dispositif (1) selon l'une quelconque des
revendications 1 à 10, **caractérisé en ce que** la première surface principale (2a) présente une adhérence et/ou une rugosité et/ou une texturation par des reliefs qui est supérieure à celle(s) de la deuxième surface principale (2b).

12. 12 - Dispositif (1) selon l'une quelconque des
revendications 1 à 11, **caractérisé en ce que** les moyens d'engagement (4) comportent un anneau (4a), de préférence à taille réglable, et tout préférentiellement à taille réglable par une fente radiale ménagée dans l'anneau (4a).

13. 13 - Dispositif (1) selon l'une quelconque des
revendications 1 à 12, **caractérisé en ce que** :
- les moyens d'engagement (4) s'étendent généralement dans un premier plan (P1),
- la platine (5) s'étend dans un deuxième plan (P2) sensiblement perpendiculaire au premier plan (P1) et s'étend de façon prépondérante ou complètement d'un premier côté dudit premier plan (P1).

14. 14 - Utilisation d'un dispositif (1) selon l'une quelconque des revendications 1 à 13, lors de laquelle l'utilisateur porte le porte-plectre (3) au doigt (D) en ayant la platine (5) disposée du côté intérieur de sa main (M).

15. 15 - Utilisation selon la revendication 14 d'un dispositif (1) selon la revendication 13, lors de laquelle l'utilisateur porte le porte-plectre (3) au doigt (D) de façon que la platine (5) se développe de façon prépondérante ou complètement en direction de l'extrémité libre (EL) de son doigt (D).

## Patentansprüche

1. Vorrichtung (1), um die Saiten eines Saiteninstruments in Vibration zu versetzen, umfassend:
- ein Plektrum (2), das eine erste Hauptfläche (2a) umfasst und eine der ersten Hauptfläche (2a) gegenüberliegende zweite Hauptfläche (2b) umfasst,
- einen Plektrumträger (3), der Eingriffsmittel (4) aufweist, die in der Lage sind, einen Finger (D) eines Verwenders aufzunehmen, und der eine Platte (5) mit einer Aufnahmefläche (5a) aufweist,
- Haltemittel zum Magnetisieren (6) des Plektrums (2) entlang seiner zweiten Hauptfläche (2b) auf der Aufnahmefläche (5a),
**dadurch gekennzeichnet, dass** die Magnetisierungshaltemittel (6) umfassen:
- mindestens zwei erste Permanentmagnete (7a, 7b), die mit der Platte (5) fest verbunden sind, wobei die besagten mindestens zwei ersten Permanentmagnete (7a, 7b) jeweils ihren Magnetpol einer ersten und gleichen Polarität in Richtung der Aufnahmefläche (5a) ausgerichtet haben,
- mindestens zwei zweite Permanentmagnete (8a, 8b), die mit dem Plektrum (2) fest verbunden sind, wobei die besagten mindestens zwei zweiten Permanentmagnete (8a, 8b) jeweils ihren Magnetpol einer zweiten und gleichen Polarität zur zweiten Hauptfläche (2b) hin ausgerichtet haben, wobei die zweite Polarität der ersten Polarität entgegengesetzt ist, so dass die besagten mindestens zwei zweiten Permanentmagnete (8a, 8b), die mit dem Plektrum (2) fest verbunden sind, jeweils von den besagten mindestens zwei ersten Permanentmagneten (7a, 7b) angezogen werden können, die mit der Platte (5) fest verbunden sind.

2. Vorrichtung (1) nach Anspruch 1, **dadurch gekennzeichnet, dass** die Platte (5) und das Plektrum (2) jeweils nur zwei Permanentmagnete (7a, 7b; 8a, 8b) haben.

3. Vorrichtung (1) nach einem der Ansprüche 1 oder 2, **dadurch gekennzeichnet, dass** die mit der Platte (5) fest verbundenen ersten Permanentmagnete (7a, 7b) in der Platte (5) angebracht sind und dabei vorzugsweise mit ihrem Magnetpol der einen ersten Polarität bündig mit der Aufnahmefläche (5a) angeordnet sind.

4. Vorrichtung (1) nach einem der Ansprüche 1 bis 3, **dadurch gekennzeichnet, dass** die mit dem Plektrum (2) fest verbundenen zweiten Permanentmagnete (8a, 8b) im Plektrum (2) angebracht sind und dabei vorzugsweise mit ihrem zweiten Magnetpol der einen zweiten Polarität bündig mit der zweiten Hauptfläche (2b) angeordnet sind.

5. Vorrichtung (1) nach einem der Ansprüche 1 bis 4, **dadurch gekennzeichnet, dass** die Magnetpole erster Polarität der ersten Permanentmagnete (7a, 7b) denselben Abstand und denselben Querschnitt aufweisen wie die Magnetpole zweiter Polarität der zweiten Permanentmagnete (8a, 8b).

6. Vorrichtung (1) nach einem der Ansprüche 1 bis 5, **dadurch gekennzeichnet, dass** die Aufnahmefläche (5a) mit einer Schicht aus Fasermaterial, vorzugsweise Filz, bedeckt ist.

7. Vorrichtung (1) nach einem der Ansprüche 1 bis 6, **dadurch gekennzeichnet, dass**:
- das Plektrum (2) eine im Wesentlichen dreieckige Form hat mit einem ersten Scheitel (9a), der dazu bestimmt ist, die Saiten anzuschlagen, mit einem gegenüberliegenden Rand (10) und mit einem ersten (11a) und einem zweiten (11b) seitlichen Rand neben dem ersten Scheitel (9a),
- die zweiten Permanentmagnete (8a, 8b) des Plektrums (2) näher an der gegenüberliegenden Kante (10) als an dem ersten Scheitel (9a) sind.

8. Vorrichtung (1) nach Anspruch 7, **dadurch gekennzeichnet, dass**:
- die zweiten Permanentmagnete (8a, 8b) in Richtung eines Endes der besagten gegenüberliegenden Kante (10) versetzt sind,
- die Eingriffsmittel (4) sich allgemein in einer ersten Ebene (P1) erstrecken,
- die ersten und zweiten Permanentmagnete (7a, 7b; 8a, 8b) jeweils auf der Platte (5) und auf dem Plektrum (2) angeordnet sind, so dass, wenn die zweiten Permanentmagnete (8a, 8b) von den ersten Permanentmagneten (7a, 7b) gehalten werden, das Plektrum (2) mit seiner zweiten Seitenkante (11b) im Wesentlichen parallel zu der besagten ersten Ebene (P1) ausgerichtet ist.

9. Vorrichtung (1) nach Anspruch 7, **dadurch gekennzeichnet, dass**:
- die zweiten Permanentmagnete (8a, 8b) in Richtung eines Endes der besagten gegenüberliegenden Kante (10) versetzt sind,
- die Eingriffsmittel (4) sich allgemein in einer ersten Ebene (P1) erstrecken,
- die ersten Permanentmagnete (7a, 7b) entlang einer ersten Richtung (I-I) aufgereiht sind, die im Wesentlichen parallel zu der besagten ersten Ebene (P1) ausgerichtet ist,
- die zweiten Permanentmagnete (8a, 8b) entlang einer zweiten Richtung (II-II) aufgereiht sind, die im Wesentlichen parallel zur zweiten Seitenkante (11b) ausgerichtet ist.

10. Vorrichtung (1) nach einem der Ansprüche 7 bis 9, **dadurch gekennzeichnet, dass** das Plektrum (2) in der Nähe seiner dem ersten Scheitel (9a) gegenüberliegenden Kante (10) eine Dicke zwischen 1,5 mm und 3 mm aufweist.

11. Vorrichtung (1) nach einem der Ansprüche 1 bis 10, **dadurch gekennzeichnet, dass** die erste Hauptfläche (2a) eine Haftung und/oder Rauheit und/oder Textur mittels Reliefs aufweist, die größer ist als die der zweiten Hauptfläche (2b).

12. Vorrichtung (1) nach einem der Ansprüche 1 bis 11, **dadurch gekennzeichnet, dass** die Eingriffsmittel (4) einen Ring (4a) aufweisen, vorzugsweise mit einstellbarem Umfang und besonders bevorzugt durch einen radialen Schlitz mit einstellbarem Umfang, der in dem Ring (4a) ausgebildet ist.

13. Vorrichtung (1) nach einem der Ansprüche 1 bis 12, **dadurch gekennzeichnet, dass**:
- die Eingriffsmittel (4) sich allgemein in einer ersten Ebene (P1) erstrecken,
- die Platte (5) sich in einer zweiten Ebene (P2) erstreckt, die im Wesentlichen senkrecht zur ersten Ebene (P1) ist und sich überwiegend oder vollständig auf einer ersten Seite der besagten ersten Ebene (P1) erstreckt.

14. Verwendung einer Vorrichtung (1) nach einem der Ansprüche 1 bis 13, bei der der Verwender den Plektrumträger (3) am Finger (D) trägt, wobei die Platte (5) auf der Innenseite seiner Hand (M) angeordnet ist.

15. Verwendung nach Anspruch 14 einer Vorrichtung (1) nach Anspruch 13, bei der der Verwender den Plektrumträger (3) so am Finger (D) trägt, dass sich die Platte (5) überwiegend oder vollständig in Richtung des freien Endes (EL) seines Fingers (D) entwickelt.

## Claims

1. Device (1) for making the strings of a stringed instrument vibrate, comprising:
- a plectrum (2) comprising a first main surface (2a) and comprising a second main surface (2b) opposite the first main surface (2a),
- a plectrum holder (3) having engagement means (4) that are able to receive a finger (D) of a user, and having a plate (5) with a receiving surface (5a),
- means (6) for retaining the plectrum (2), via its second main surface (2b), on the receiving surface (5a) by magnetization,
**characterized in that** the means (6) for retaining by magnetization comprise:
- at least two first permanent magnets (7a, 7b) secured to the plate (5), said at least two first permanent magnets (7a, 7b) each having their magnetic pole with one and the same, first polarity oriented towards the receiving surface (5a),
- at least two second permanent magnets (8a, 8b) secured to the plectrum (2), said at least two second permanent magnets (8a, 8b) each having their magnetic pole with one and the same, second polarity oriented towards the second main surface (2b), the second polarity being the reverse of the first polarity, such that said at least two second permanent magnets (8a, 8b) secured to the plectrum (2) can be respectively attracted by said at least two first permanent magnets (7a, 7b) secured to the plate (5).

2. Device (1) according to Claim 1, **characterized in that** the plate (5) and the plectrum (2) each have only two permanent magnets (7a, 7b; 8a, 8b).

3. Device (1) according to either of Claims 1 and 2, **characterized in that** the first permanent magnets (7a, 7b) secured to the plate (5) are housed in the plate (5), preferably having their magnetic pole with a first polarity disposed flush with the receiving surface (5a) .

4. Device (1) according to any one of Claims 1 to 3, **characterized in that** the second permanent magnets (8a, 8b) secured to the plectrum (2) are housed in the plectrum (2), preferably having their magnetic pole with a second polarity disposed flush with the second main surface (2b).

5. Device (1) according to any one of Claims 1 to 4, **characterized in that** the magnetic poles with a first polarity of the first permanent magnets (7a, 7b) have the same spacing and the same cross section as the magnetic poles with a second polarity of the second permanent magnets (8a, 8b).

6. Device (1) according to any one of Claims 1 to 5, **characterized in that** the receiving surface (5a) is covered with a layer of a fibrous material, preferably baize.

7. Device (1) according to any one of Claims 1 to 6, **characterized in that**:
- the plectrum (2) has a substantially triangular shape, with a first vertex (9a) intended to strum the strings, with an opposite edge (10), and with a first lateral edge (11a) and a second lateral edge (11b) that are adjacent to the first vertex (9a),
- the second permanent magnets (8a, 8b) of the plectrum (2) are closer to the opposite edge (10) than to the first vertex (9a).

8. Device (1) according to Claim 7, **characterized in that**:
- the second permanent magnets (8a, 8b) are offset towards one end of said opposite edge (10),
- the engagement means (4) extend generally in a first plane (P1),
- the first and second permanent magnets (7a, 7b; 8a, 8b) are respectively disposed on the plate (5) and on the plectrum (2) such that, when the second permanent magnets (8a, 8b) are retained by the first permanent magnets (7a, 7b), the plectrum (2) is oriented with its second lateral edge (11b) substantially parallel to said first plane (P1).

9. Device (1) according to Claim 7, **characterized in that**:
- the second permanent magnets (8a, 8b) are offset towards one end of said opposite edge (10),
- the engagement means (4) extend generally in a first plane (P1),
- the first permanent magnets (7a, 7b) are aligned in a first direction (I-I) substantially parallel to said first plane (P1),
- the second permanent magnets (8a, 8b) are aligned in a second direction (II-II) substantially parallel to the second lateral edge (11b).

10. Device (1) according to any one of Claims 7 to 9, **characterized in that** the plectrum (2) has, in the vicinity of its edge (10) opposite the first vertex (9a), a thickness of between 1.5 mm and 3 mm.

11. Device (1) according to any one of Claims 1 to 10, **characterized in that** the first main surface (2a) has a grip and/or roughness and/or texturing with reliefs that is greater than that/those of the second main surface (2b).

12. Device (1) according to any one of Claims 1 to 11, **characterized in that** the engagement means (4) have a ring (4a), preferably of adjustable size, and most preferentially of which the size can be adjusted via a radial slot provided in the ring (4a).

13. Device (1) according to any one of Claims 1 to 12, **characterized in that**:
- the engagement means (4) extend generally in a first plane (P1),
- the plate (5) extends in a second plane (P2) substantially perpendicular to the first plane (P1) and extends predominantly or completely on a first side of said first plane (P1).

14. Use of a device (1) according to any one of Claims 1 to 13, during which the user wears the plectrum holder (3) on his or her finger (D), with the plate (5) disposed on the inside of his or her hand (M) .

15. Use according to Claim 14 of a device (1) according to Claim 13, during which the user wears the plectrum holder (3) on his or her finger (D) such that the plate (5) extends predominantly or completely towards the free end (EL) of his or her finger (D).
